# EUROPEAN PATENT APPLICATION

(11) **EP 4 434 833 A2**
(43) Date of publication of application: **25.09.2024**
(21) Application number: 24192801.9
(22) Date of filing: 24.08.2022
(51) Int. Cl.: B60T 13/74

(54) **ELECTRICALLY OPERATED BRAKE ASSEMBLY, COMPUTER-IMPLEMENTED METHOD FOR CONTROLLING AN ELECTRICALLY OPERATED BRAKE ASSEMBLY, COMPUTER PROGRAM AND NON-VOLATILE DATA CARRIER**

(62) Divisional of application: 22191873.3
(71) Applicant: Dellner Bubenzer AB, 781 70 Borlänge (SE)
(72) Inventor: PRIM, Viktor, 811 61 SANDVIKEN (SE)
(74) Representative: Brann AB

(57) **Abstract**

An electrically operated brake assembly (200) for a rail vehicle contains: a rotating member mechanically linked to a wheel axle of the rail vehicle, at least one friction member (221; 222) movable between an engaged position in which the at least one friction member (221; 222) contacts the rotating member, and a disengaged position in which the rotating member is freely rotatable without contacting the at least one friction member (221; 222), a gear assembly (220) arranged to operate mechanically on the at least one friction member (221; 222), an electric motor (230) controllable via a control signal (CS) and configured to cause the gear assembly (220) to operate on the at least one friction member 221; 222) to move between the engaged and disengaged positions, a force sensor (225) configured to produce a pressure signal (F) indicating a magnitude of a force at which the at least one friction member (221; 222) contacts the rotating member, an angular position sensor (237) configured to produce a pulse-count signal (PC) where each pulse count reflects a particular angular movement of an output shaft of the electric motor (230) and a controller (120) configured to obtain the pressure signal (F) and the pulse count signal (PC), and based thereon define a home position for the electric motor (230).

## Description

### TECHNICAL FIELD

The present invention relates generally to brake arrangements for rail vehicles. Especially, the invention relates to an electrically operated brake assembly according to the preamble of claim 1 and a corresponding computer-implemented method. The invention also relates to a computer program and a non-volatile data carrier storing such a computer program.

### BACKGROUND

In operation of an electrically powered rail vehicle, the onboard motors are typically engaged as generators to decelerate the rail vehicle. However, for efficiency and safety reasons, one cannot rely solely on this braking strategy. In particular, a dedicated brake function will always be needed to ensure emergency braking functionality and that the rail vehicle remains stationary after that it has been brought to a stop. In many cases, the same brake units are used for different types of braking functionality, such as service braking, emergency braking and parking braking.

Typically, the brake unit includes a rotating member mechanically linked to a wheel axle of the rail vehicle plus one or more friction members arranged to be pressed against the rotating member to decelerate the rail vehicle. Specifically, the contact between the friction material, i.e. the lining in the brake pads or shoes creates frictional contact with the rotating member, e.g. a disc or a drum, creates the desired amount of braking torque to slow down the rail vehicle. Repeated braking operations progressively wear away friction material, which results in a progressively thinner brake lining. As the friction material wears, the distance between the brake lining and the rotating member increases. The increase in distance increases the amount of mechanical travel required to engage the brake. This, in turn, translates into an extended delay before the friction members make contact with the rotating member. In other words, the rail vehicle will travel a longer distance before deceleration begins. Of course, this is an undesired effect.

Various solutions are known in the art to adjust and accommodate for the wearing of the brake lining, such that the friction members maintain a desired idle distance from the rotating member.

US 6,896,106 shows a method of accommodating wear in an electrically operated brake assembly that includes setting a home position when a brake shoe engages a brake drum. A stepper motor drives the brake shoes into engagement with the drum. Upon engagement of the brake shoes with the drum, the stepper motor slips. Slipping of a stepper motor indicates that a home position has been reached. Upon release of the brake, the brake shoe is moved away from the drum a fixed distance. The fixed distance is an optimal distance between the friction member and the rotating member such that regardless of wear, the distance relationship between the brake shoe and drum is maintained.

The above method may however be problematic because when driving a stepper motor at high speeds, which is typically the case in a braking scenario, there is a risk that the stepper motor slips/ stalls even before the friction members engage with the rotating member. Consequently, one may erroneously conclude that the friction members engage the rotating member earlier, i.e. at a shorter distance than what is actually the case. As a result, the idle distance will be set too wide. Similar effects may also arise under extreme temperature conditions and/or if the mechanical members are poorly lubricated.

Moreover, driving the stepper motor so that the friction members engage with the rotating member, and as a result, the stepper motor slips/stalls normally causes vibrations. This may result in that a few stepper-motor pulses are registered even though the friction members do not actually move at all. In other words, an unknown number of "blind steps" may be registered in connection with the engagement. Of course, this translates into a distance error when later releasing the brake, and moving the friction members the fixed distance away from the rotating member. The vibrations are not systematic, and therefore cannot be compensated for in a straightforward manner. Consequently, the idle distance becomes an uncertain parameter, and the delay before the friction members make contact with the rotating member cannot be predicted.

### SUMMARY

The object of the present invention is to solve the above problems and offer a solution that provides a foreseeable and consistent braking behavior for a rail vehicle regardless of the wear of the friction members.

According to one aspect of the invention, the object is achieved by an electrically operated brake assembly for a rail vehicle. The brake assembly contains a rotating member, at least one friction member, a gear assembly, an electric motor, a force sensor, an angular position sensor and a controller. The rotating member is mechanically linked to a wheel axle of the rail vehicle, which, in turn typically carries two wheels. The at least one friction member is movable between an engaged position in which the at least one friction member contacts the rotating member, and a disengaged position in which the rotating member is freely rotatable without contacting the at least one friction member. The gear assembly is arranged to operate mechanically on the at least one friction member. The electric motor is controllable via a control signal and is configured to cause the gear assembly to operate on the at least one friction member to move between the engaged and disengaged positions. The force sensor is configured to produce a pressure signal indicating a magnitude of a force at which the at least one friction member contacts the rotating member. The angular position sensor is configured to produce a pulse-count signal, where each pulse count reflects a particular angular movement of an output shaft of the electric motor. The controller is configured to obtain the pressure signal and the pulse count signal, and based thereon define a home position for the electric motor.

The above-described electrically operated brake assembly is advantageous because the pressure signal unambiguously ties the pulse count signal to an exact mechanical relationship between the at least one friction member and the rotating member, which, in turn, ensures a consistent idle distance.

According to one embodiment of this aspect of the invention, the home position represents such a positioning of the electric motor that the gear assembly is caused to locate the at least one friction member at an idle distance from the rotating member; and when the at least one friction member is located at the idle distance, the at least one friction member is moveable to the engaged position by controlling the electric motor in a forward direction until a first predefined number of pulse counts have been obtained in the controller via the pulse count signal. Thus, a foreseeable and reliable braking effect will be attained by controlling the electric motor in the forward direction.

According to another embodiment of this aspect of the invention, the controller is configured to define the home position by executing the steps:
(a) controlling the electric motor to cause the gear assembly to operate on the at least one friction member in an approaching direction wherein the at least one friction member is moved to the engaged position, and continue to control the electric motor to cause the gear assembly to operate on the at least one friction member in the approaching direction until the pressure signal exceeds a first threshold value, thereafter
(b) controlling the electric motor to stop, and subsequently
(c) retracting the at least one friction member from the rotating member to the idle distance by controlling the electric motor to operate on the gear assembly to cause the gear assembly to move the at least one friction member in a retreating direction until a second predefined number of pulse counts have been obtained in the controller via the pulse count signal, which retreating direction is opposite to the approaching direction.

Thereby, it is guaranteed that, after a known delay, a particular braking force will be applied onto the rotating member if the electric motor is controlled to operate on the at least one friction member in the approaching direction until a particular number of pulse counts have been obtained via the pulse count signal.

Preferably, between steps (b) and (c), the controller is configured to retract the at least one friction member from the rotating member until the pressure signal falls below a second threshold value being lower than the first threshold value. Namely, thereby it can be safeguarded that the at least one friction member is released from the rotating member allowing it to rotate freely.

According to yet another embodiment of this aspect of the invention, each time when executing the steps (a) to (c) the controller is configured to: record a first number of pulse counts obtained via the pulse count signal while executing step (a) and compare the recorded first number of pulse counts to the second predefined number of pulse counts defining the idle distance. If the latter number is lower, a wear count incremented by a difference between said first and second numbers. Further, if the wear count exceeds a threshold count, a maintenance alarm is triggered with respect to the at least one friction member. Consequently, friction member replacement can be effected in due time.

Alternatively, each time when executing the steps (a) to (c) the controller may be configured to control the electric motor to operate on the gear assembly to cause the gear assembly to retract the at least one friction member from the rotating member in the retreating direction until the pressure signal falls below a negative threshold value designating a maximum retraction of the at least one friction member. Then, the controller is configured to record a first number of pulse counts obtained via the pulse count signal while executing step (a). If the first number of pulse counts exceeds a threshold count, the controller is configured to trigger the maintenance alarm. Namely, this corresponds to a situation where the distance between maximally retracted friction member(s) and the rotating member is excessive.

According to a further embodiment of this aspect of the invention, the electric motor is configured to produce a rotational force on an output shaft of the electric motor, which rotational force is proportional to a drive current being fed into the electric motor, and the controller is configured to derive the pressure signal based on the drive current fed into the electric motor. Hence, the force sensor may for example be implemented in software in the controller.

Alternatively, the force sensor may contain a load cell or a wire strain gauge and be comprised in the gear assembly. This renders the implementation robust and straightforward.

According to still another embodiment of this aspect of the invention, the electric motor is a stepper motor implementing the angular position sensor. Thus, the design does not need to include a discrete angular position sensor in order to produce the pulse-count signal.

Alternatively, the angular position sensor constitutes a separate component. In such a case, it is advantageous if the angular position sensor is comprised in a Bevel gear arranged to connect the output shaft of the electric motor with the gear assembly. Namely, this renders the design volume efficient and makes it straightforward to keep the angular position sensor physically protected.

According to a further embodiment of this aspect of the invention, the rotating member is a brake disc and the at least one friction member comprises two friction members arranged on a respective one of two pressing members configured to clamp the friction members against the brake disc to perform a braking action in response to a brake command. Such a disc brake arrangement typically allows for efficient braking of a rail vehicle.

According to another aspect of the invention, the object is achieved by a computer-implemented method implemented in at least one processing circuitry, which method is for controlling an electrically operated brake assembly for a rail vehicle, which brake assembly contains: a rotating member mechanically linked to a wheel axle of the rail vehicle, at least one friction member movable between an engaged position in which the at least one friction member contacts the rotating member and a disengaged position in which the rotating member is freely rotatable without contacting the at least one friction member, a gear assembly arranged to operate mechanically on the at least one friction member, and an electric motor controllable via a control signal and configured to cause the gear assembly to operate on the at least one friction member to move between the engaged and disengaged positions. The brake assembly further includes a force sensor configured to produce a pressure signal indicating a magnitude of a force at which the at least one friction member contacts the rotating member, and an angular position sensor configured to produce a pulse-count signal where each pulse count reflects a particular angular movement of an output shaft of the electric motor, and the method involves: obtaining the pressure and pulse count signals and based thereon defining a home position for the electric motor. The advantages of this method, as well as the preferred embodiments thereof are apparent from the discussion above with reference to the proposed electrically operated brake assembly.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle containing an electrically operated brake assembly according to one embodiment of the invention;
- Figure 2: shows an electrically operated brake assembly according to one embodiment of the invention;
- Figures 3a-b: illustrate engaged and a disengaged positions for the at least one friction member according to one embodiment of the invention;
- Figure 4: shows a block diagram of a measurement controller according to one embodiment of the invention;
- Figures 5a-b: show graphs illustrating how the at least one friction member is controlled from the idle distance to the engaged position according to one embodiment of the invention;
- Figures 6a-b: show graphs illustrating how a force between the at least one friction member and the rotating member varies over time when the brake assembly is calibrated for wear according to two embodiments of the invention;
- Figures 7a-b: show graphs illustrating how the electric motor is controlled in response to the force registered in Fi- gures 6a and 6b respectively according to the two embodiments of the invention;
- Figure 8: illustrates, by means of a flow diagram, the general method according to the invention; and
- Figure 9: illustrates, by means of a flow diagram, one embodiment of the general method according to the invention.

### DETAILED DESCRIPTION

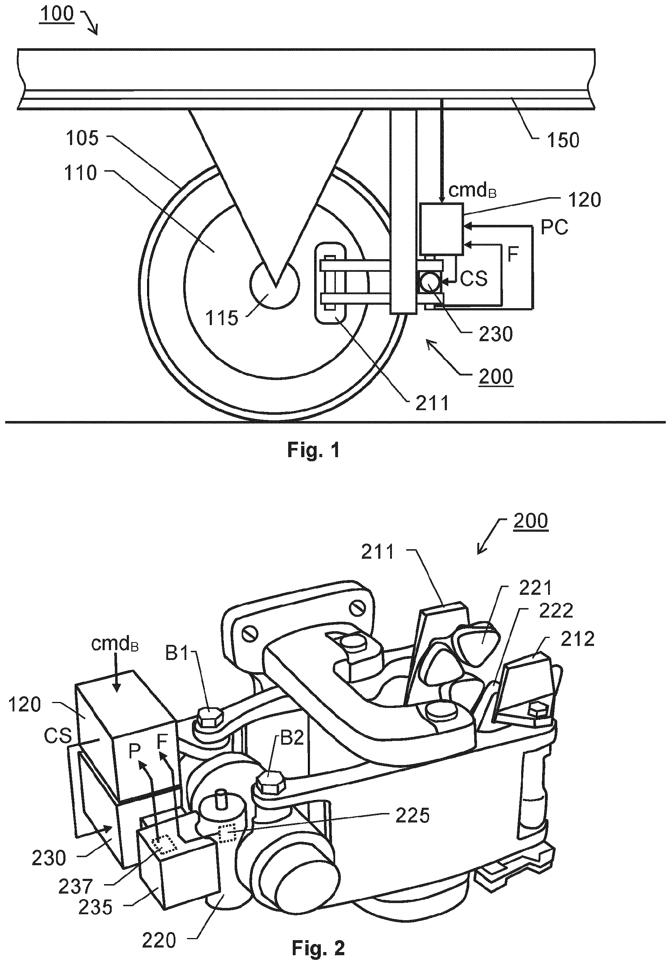

In Figure 1, we see a schematic representation of rail vehicle 100 containing an electrically operated brake assembly 200 according to one embodiment of the invention. The brake assembly 200 contains: a rotating member 110, at least one friction member 221 and 222, a gear assembly 220, an electric motor 230, a force sensor 225, an angular position sensor 237 and a controller 120.

The rotating member 110 is mechanically linked to a wheel axle 115 of the rail vehicle 100. Typically, the wheel axle 115, in turn, carries two wheels configured to roll on a respective rail. Figure 1 exemplifies one such wheel 105.

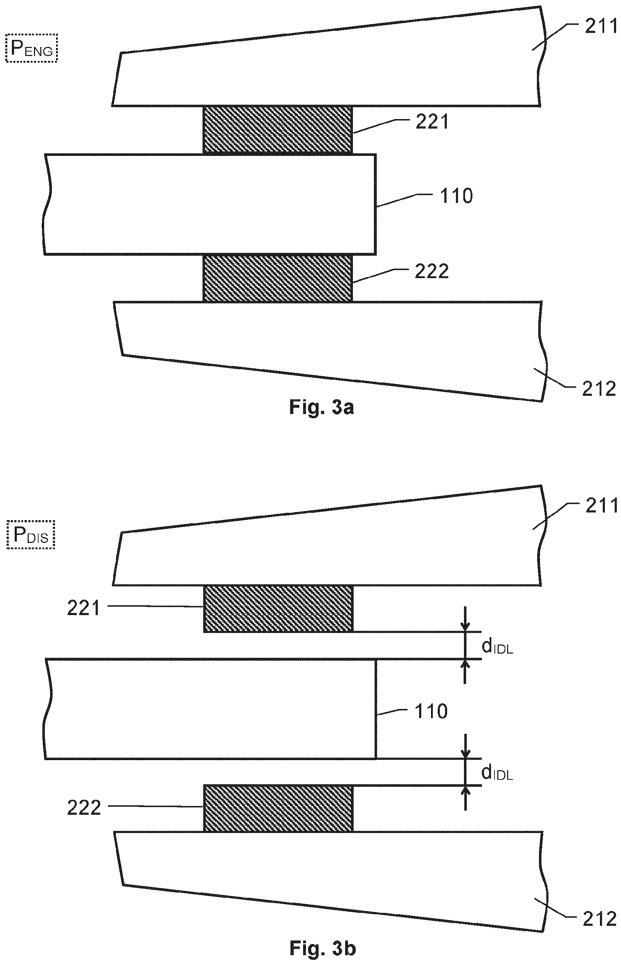

Referring now also to Figures 3a and 3b, the at least one friction member is here exemplified by 221 and 222 respectively. It should be noted, however, that the arrangement of the at least one friction member and the rotating member may be implemented in alternative ways. For example, the rotating member may be a rotating cylinder-shaped part onto which one or more friction members act either from the inside, such as in a conventional drum brake, and/ or from the outside.

In any case, the friction member(s) is/are movable between an engaged position P_{ENG} in which the friction member(s) 221 and 222 contact the rotating member 110, and a disengaged position P_{DIS} in which the rotating member 110 is freely rotatable without contacting any of the friction members 221 or 222. In one embodiment of the invention, the rotating member 110 is a brake disc and the at least one friction member contains two friction members as illustrated in Figures 1, 3a and 3b by 221 and 222 respectively, which friction members are arranged on a respective one of two pressing members 211 and 212 that are configured to clamp the friction members 221 and 222 respectively against the brake disc 110 and thus perform a braking action in response to a brake command cmd_{B}.

The gear assembly 220 is arranged to operate mechanically on the friction members 221 and 222, and the electric motor 230 is controllable via a control signal CS to cause the gear assembly 220 to operate on the friction members 221 and 222 to move between the engaged and disengaged positions P_{ENG} and P_{DIS} respectively.

Referring now also to Figure 2, the force sensor 225, which may for example contain a load cell or a wire strain gauge is configured to produce a pressure signal F indicating a magnitude of a force at which the friction members 221 and 222 contact the rotating member 110. According to one embodiment of the invention, the force sensor 225 is contained in the gear assembly 220. This is advantageous because thereby the force sensor 225 may be mechanically protected from external influence. According to other embodiments of the invention, the force sensor 225 is instead contained in one or both of first and second bolts B1 and B2 respectively of the gear assembly 220, via which bolts B1 and B2 an output force from the electric motor 230 is conveyed to the friction members 221 and 222.

According to yet another embodiment of the invention, the electric motor 230 is designed to produce a rotational force on an output shaft of the electric motor 230, which rotational force is proportional to a drive current being fed into the electric motor 230. The controller 120 is further configured to derive the pressure signal F based on the drive current fed into the electric motor 230. Thus, the force sensor 225 forms an integral part of the electric motor 230 and the controller 120.

The angular position sensor 237, which may be implemented by means of a tachometer that is configured to produce a pulse-count signal PC where each pulse count reflects a particular angular movement of the output shaft of the electric motor 230. According to one embodiment of the invention, a Bevel gear 235 is arranged to connect the output shaft of the electric motor 230 with the gear assembly 220, and the angular position sensor 237 is comprised in the Bevel gear 235. Thus, the overall design can be made a physically compact and the angular position sensor 237 may be shielded from dirt and mechanical damage.

The controller 120 is configured to obtain the pressure signal F and the pulse count signal PC. Based thereon, the controller 120 is configured to define a home position for the electric motor 230 as will be explained below.

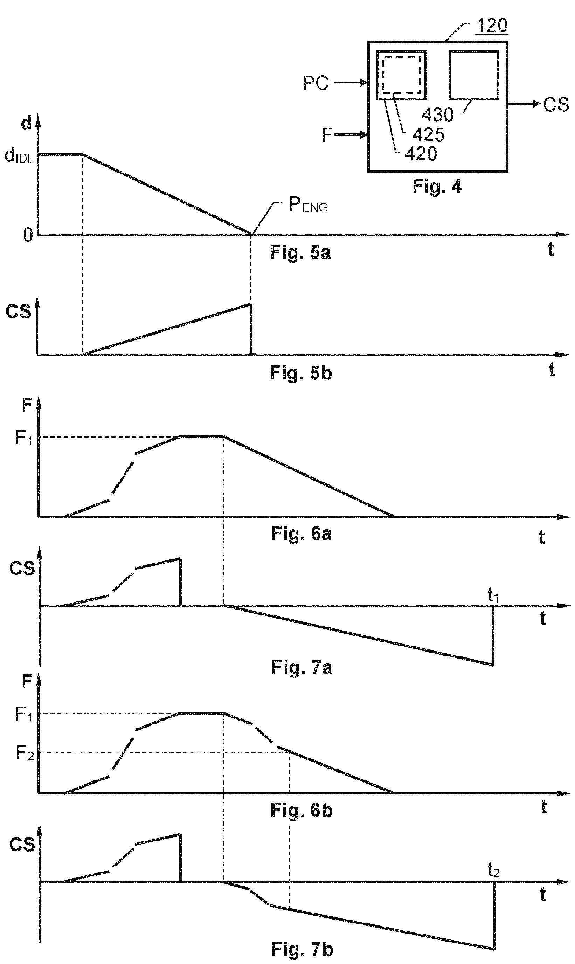

Figure 4 shows a block diagram of the controller 120 according to one embodiment of the invention. The controller 120 includes processing circuitry in the form of at least one processor 430 and a memory unit 420, i.e. non-volatile data carrier, storing a computer program 425, which, in turn, contains software for making the at least one processor 430 execute the actions mentioned in this disclosure when the computer program 425 is run on the at least one processor 430.

As mentioned above, the force signal F need not be an external signal input to the controller 120. Instead, the force signal F may be obtained internally in the at least one processor 430 based on the drive current fed into the electric motor 230.

Figures 5a and 5b show graphs illustrating how the at least one friction member, e.g. 221 and 222, is controlled from the idle distance P_{DIS} to the engaged position P_{ENG} according to one embodiment of the invention. The idle distance P_{DIS} is the respective distances between each of the friction members 221 and 222 and the rotating member 110, and the engaged position P_{ENG} is where the respective distance between each of the friction members 221 and 222 and the rotating member 110 is zero.

According to one embodiment of the invention, the home position represents such a positioning of the electric motor 230 that the gear assembly 220 is caused to locate the friction members 221 and 222 at the idle distance d_{IDL} from the rotating member 110. When the friction members 221 and 222 are located at the idle distance d_{IDL}, the friction members 221 and 222 are moveable to the engaged position P_{ENG} by controlling the electric motor 230 in a forward direction until a first predefined number of pulse counts have been obtained in the controller 120 via the pulse count signal PC.

Referring to Figures 6a and 7a, we will explain how the brake assembly 220 is calibrated for wear according to one embodiment of the invention. Figure 6a shows a graph illustrating how a force F between the friction members 221 and 222 and the rotating member 110 varies over time t and Figure 7a shows a graph illustrating how the electric motor 230 is controlled over time t by a control signal CS. In this embodiment, the controller 120 is configured to define the home position by executing the following steps.
(a) First, the controller 120 controls the electric motor 120 to cause the gear assembly 220 to operate on the friction members 221 and 222 in an approaching direction, wherein the friction members 221 and 222 are moved to the engaged position P_{ENG}, i.e. towards the rotatable member 110. The controller 120 continues to control the electric motor 120 to cause the gear assembly 220 to operate on the friction members 221 and 222 in the approaching direction until the pressure signal F exceeds a first threshold value F₁.
(b) Thereafter, the controller 120 controls the electric motor 230 to stop.
(c) Subsequently, the controller 120 controls the friction members 221 and 222 to retract from the rotating member 110 and stop at the idle distance d_{IDL} therefrom by controlling the electric motor 230 to operate on the gear assembly 220 to cause the gear assembly 220 to move the friction members 221 and 222 in a retreating direction until a second predefined number of pulse counts have been obtained in the controller 120 via the pulse count signal PC. The retreating direction is opposite to the approaching direction, and the second predefined number of pulse counts are presumed to have been obtained at the point in time t₁.

Referring to Figures 6b and 7b, we will explain how the brake assembly 220 is calibrated for wear according to another embodiment of the invention. Figure 6b shows a graph illustrating how the force F between the friction members 221 and 222 and the rotating member 110 varies over time t and Figure 7b shows a graph illustrating how the electric motor 230 is controlled over time t by the control signal CS. In this embodiment, the controller 120 is configured to execute the below step between the steps (b) and (c) above:
Control the friction members 221 and 222 to retract from the rotating member 110 until the pressure signal F falls below a second threshold value F₂, which is lower than the first threshold value F₁. Thus, not until after that the pressure signal F has fallen below the second threshold value F₂, the controller 120 controls the electric motor 230 to operate on the friction members 221 and 222 in the retreating direction until the second predefined number of pulse counts have been obtained. Here, this is assumed to occur at the point in time t₂, which may or may not be later than t₁.

In order to provide automatic maintenance notifications it is advantageous if each time when executing the steps (a) to (c) above, the controller 120 is further configured to perform the following:
(i) record a first number of pulse counts obtained via the pulse count signal PC while executing step (a)
(ii) compare the recorded first number of pulse counts to the second predefined number of pulse counts of step (c) above, if latter number is lower
(iii) increment a wear count by a difference between said first and second numbers, and if the wear count exceeds a threshold count, and
(iv) if the wear count exceeds a threshold count, trigger a maintenance alarm with respect to the friction members 221 and 222.

In an alternative embodiment of the invention, each time when executing the steps (a) to (c), the controller 120 is instead configured to:
(i) control the electric motor 230 to operate on the gear assembly 220 to cause the gear assembly 220 to retract the friction members 221 and 222 from the rotating member 110 in the retreating direction until the pressure signal F falls below a negative threshold value designating a maximum retraction of the friction members 221 and 222,
(ii) record a first number of pulse counts obtained via the pulse count signal while executing step (a), and
(iii) if the first number of pulse counts exceeds the threshold count, the controller is configured to trigger the maintenance alarm with respect to the friction members 221 and 222.

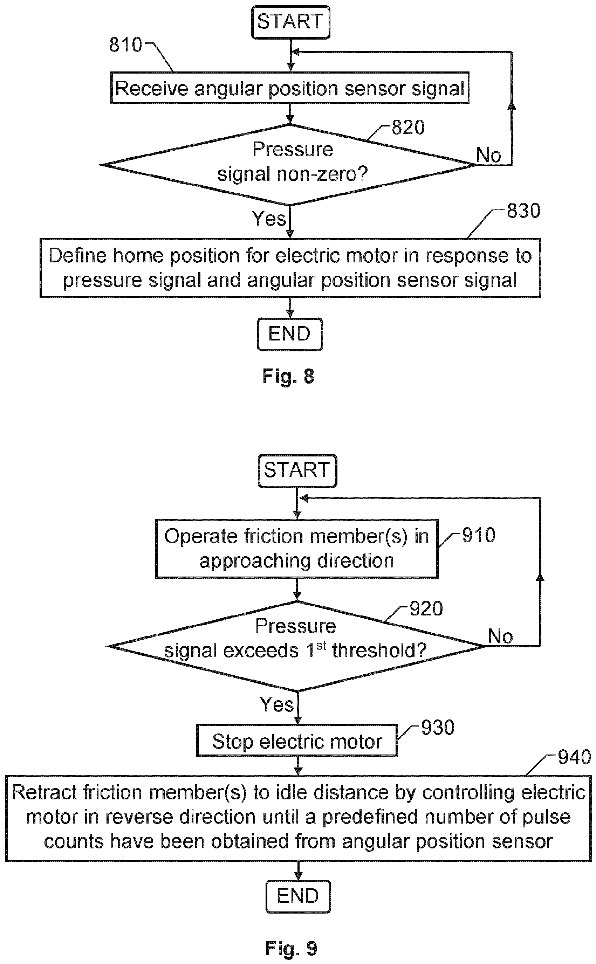

In order to sum up, and with reference to the flow diagram in Figure 8, we will now describe the computer-implemented method according to the invention for controlling an electrically operated brake assembly for a rail vehicle. The brake assembly is presumed to contain: a rotating member mechanically linked to a wheel axle of the rail vehicle, at least one friction member movable between an engaged position in which the at least one friction member contacts the rotating member, and a disengaged position in which the rotating member is freely rotatable without contacting the at least one friction member, a gear assembly arranged to operate mechanically on the at least one friction member, and an electric motor controllable via a control signal and configured to cause the gear assembly to operate on the at least one friction member to move between the engaged and disengaged positions, and which method is implemented in at least one processing circuitry, for instance the above-mentioned at least one processor 430.

In a first step 810, an angular position sensor signal is received, which expresses an angular movement of an output shaft of the electric motor by means of pulse counts, where each pulse count reflects a particular angular movement of the output shaft, i.e. a given increment of a rotation angle of the output shaft.

A subsequent step 820 checks if a non-zero pressure signal has been obtained, which pressure signal indicates a force at which the friction member(s) contact/s the rotating member. If such a pressure signal has been obtained, the friction member(s) is/are presumed to be in the engaged position, a step 830 follows. Otherwise, the procedure loops back to step 810.

In step 830, a home position for the electric motor is defined based on the pulse count signal and the pressure signal. For example, the home position may represent such a positioning of the electric motor that the gear assembly is caused to locate the friction member(s) at an idle distance from the rotating member; and when the friction member(s) is/are located at the idle distance, the friction member(s) is/are moveable to the engaged position by controlling the electric motor in a forward direction until a first predefined number of pulse counts have been obtained in the controller via the pulse count signal. Consequently, the home position may be defined as a retraction of the friction members from the rotating member equivalent to a particular number of pulse counts from the engaged position detected in step 820.

After step 830 the procedure ends.

Figure 9 shows a flow diagram of a preferred embodiment of the method according to the invention for defining a home position for the electric motor, at which home position the friction member(s) is/are located at the idle distance from the rotatable member.

In a first step 910, the friction member(s) is/are controlled to move in an approaching direction towards the rotatable member by controlling the electric motor to cause the gear assembly to operate on the friction member(s).

A following step 920 checks if a pressure signal exceeds a first threshold value, which pressure signal reflects the force at which the friction member(s) contact/s the rotating member. If the pressure signal exceeds the first threshold value, the procedure continues to a step 930. Otherwise, the procedure loops back to step 910.

In step 930, the electric motor is controlled to stop the movement of the friction member(s) in the approaching direction. Thereafter, a step 949 follows in which the electric motor is controlled to operate on the gear assembly to cause the gear assembly to move the friction member(s) in a retreating direction until a second predefined number of pulse counts have been obtained via the pulse count signal. Here, the retreating direction is opposite to the approaching direction defined in step 910.

Subsequently, the procedure ends.

All of the process steps, as well as any sub-sequence of steps, described with reference to Figures 8 and 9 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

Variations to the disclosed embodiments can be understood and effected by those skilled in the art in practicing the claimed invention, from a study of the drawings, the disclosure, and the appended claims.

The invention is not restricted to the described embodiments in the figures, but may be varied freely within the scope of the claims.

## Claims

1. An electrically operated brake assembly (200) for a rail vehicle (100), which brake assembly (200) comprises:
a rotating member (110) mechanically linked to a wheel axle (115) of the rail vehicle (100),
at least one friction member (221; 222) movable between an engaged position (P_{ENG}) in which the at least one friction member (221; 222) contacts the rotating member (110), and a disengaged position (P_{DIS}) in which the rotating member (110) is freely rotatable without contacting the at least one friction member (221; 222),
a gear assembly (220) arranged to operate mechanically on the at least one friction member (221; 222), and
an electric motor (230) controllable via a control signal (CS) and configured to cause the gear assembly (220) to operate on the at least one friction member 221; 222) to move between the engaged and disengaged positions (P_{ENG}, P_{DIS}),
the brake assembly (200) comprising:
a force sensor (225) configured to produce a pressure signal (F) indicating a magnitude of a force at which the at least one friction member (221; 222) contacts the rotating member (110),
an angular position sensor (237) configured to produce a pulse-count signal (PC) where each pulse count reflects a particular angular movement of an output shaft of the electric motor (230), and
a controller (120) configured to obtain the pressure signal (F) and the pulse count signal (PC), and based thereon define a home position for the electric motor (230),
wherein the home position represents such a positioning of the electric motor (230) that the gear assembly (220) is caused to locate the at least one friction member (221; 222) at an idle distance (D_{IDL}) from the rotating member (110); and when the at least one friction member (221; 222) is located at the idle distance (d_{IDL}), the at least one friction member (221; 222) is moveable to the engaged position (P_{ENG}) by controlling the electric motor (230) in a forward direction until a first predefined number of pulse counts have been obtained in the controller (120) via the pulse count signal (PC),
wherein the controller (120) is configured to define the home position by executing the steps:
(a) controlling the electric motor (120) to cause the gear assembly (220) to operate on the at least one friction member (221; 222) in an approaching direction wherein the at least one friction member (221; 222) is moved to the engaged position (P_{ENG}), continue to control the electric motor (120) to cause the gear assembly (220) to operate on the at least one friction member (221; 222) in the approaching direction until the pressure signal (F) exceeds a first threshold value (F₁), thereafter
(b) controlling the electric motor (230) to stop, and subsequently
(c) retracting the at least one friction member (221; 222) from the rotating member (110) to the idle distance (d_{IDL}) by controlling the electric motor (230) to operate on the gear assembly (220) to cause the gear assembly (220) to move the at least one friction member (221; 222) in a retreating direction until a second predefined number of pulse counts have been obtained in the controller (120) via the pulse count signal (PC), which retreating direction is opposite to the approaching direction,
**characterized in that**, each time when executing the steps (a) to (c) the controller (120) is configured to:
control the electric motor (230) to operate on the gear assembly (220) to cause the gear assembly (220) to retract the at least one friction member (221; 222) from the rotating member (110) in the retreating direction until the pressure signal (F) falls below a negative threshold value designating a maximum retraction of the at least one friction member (221; 222),
record a first number of pulse counts obtained via the pulse count signal (PC) while executing step (a), and if the first number of pulse counts exceeds a threshold count
trigger a maintenance alarm with respect to the at least one friction member (221; 222).

2. The brake assembly (200) according to claim 1, wherein between steps (b) and (c), the controller (120) is configured to:
retract the at least one friction member (221; 222) from the rotating member (110) until the pressure signal (F) falls below a second threshold value (F₂) being lower than the first threshold value (F₁).

3. The brake assembly (200) according to any one of the claims 1 or 2, wherein, each time when executing the steps (a) to (c) the controller (120) is configured to:
record a first number of pulse counts obtained via the pulse count signal (PC) while executing step (a),
compare the recorded first number of pulse counts to the second predefined number of pulse counts, if latter number is lower
increment a wear count by a difference between said first and second numbers, and if the wear count exceeds a threshold count
trigger a maintenance alarm with respect to the at least one friction member (221; 222).

4. The brake assembly (200) according to any one of the preceding claims, wherein
the electric motor (230) is configured to produce a rotational force on an output shaft of the electric motor (230), which rotational force is proportional to a drive current being fed into the electric motor (230), and
the controller (120) is configured to derive the pressure signal (F) based on the drive current fed into the electric motor (230).

5. The brake assembly (200) according to any one of the claims 1 to 3, wherein the force sensor (225) is comprised in the gear assembly (220).

6. The brake assembly (200) according to claim 5, wherein the force sensor (225) comprises one of a load cell and a wire strain gauge.

7. The brake assembly (200) according to any one of the preceding claims, wherein the electric motor (230) is a stepper motor comprising the angular position sensor.

8. The brake assembly (200) according to any one of the claims 1 to 6, wherein the angular position sensor (237) is a component separate from the electric motor (230).

9. The brake assembly (200) according to claim 8, wherein the angular position sensor (237) is comprised in a Bevel gear (235) arranged to connect the output shaft of the electric motor (230) with the gear assembly (220).

10. The brake assembly (200) according to any one of the preceding claims, wherein the rotating member (110) is a brake disc and the at least one friction member (221; 222) comprises two friction members arranged on a respective one of two pressing members (211; 212) configured to clamp the friction members (221; 222) against the brake disc (110) to perform a braking action in response to a brake command (crude).

11. A computer-implemented method for controlling an electrically operated brake assembly (200) for a rail vehicle (100), which brake assembly (200) comprises: a rotating member (110) mechanically linked to a wheel axle (115) of the rail vehicle (100), at least one friction member (221; 222) movable between an engaged position (P_{ENG}) in which the at least one friction member (221; 222) contacts the rotating member (110), and a disengaged position (P_{DIS}) in which the rotating member (110) is freely rotatable without contacting the at least one friction member (221; 222), a gear assembly (220) arranged to operate mechanically on the at least one friction member (221; 222), and an electric motor (230) controllable via a control signal (CS) and configured to cause the gear assembly (220) to operate on the at least one friction member (221; 222) to move between the engaged and disengaged positions (P_{ENG}, P_{DIS}), the method being implemented in at least one processing circuitry (430), and the brake assembly (200) further comprising a force sensor (225) configured to produce a pressure signal (F) indicating a magnitude of a force at which the at least one friction member (221; 222) contacts the rotating member (110), and an angular position sensor (237) configured to produce a pulse-count signal (PC) where each pulse count reflects a particular angular movement of an output shaft of the electric motor (230), and the method comprises:
obtaining the pressure and pulse count signals (F; PC), and based thereon
defining a home position for the electric motor (230), wherein the home position represents such a positioning of the electric motor (230) that the gear assembly (220) is caused to locate the at least one friction member (221; 222) at an idle distance (d_{IDL}) from the rotating member (110); and when the at least one friction member (221; 222) is located at the idle distance (d_{IDL}), the at least one friction member (221; 222) is moveable to the engaged position (P_{ENG}) by controlling the electric motor (230) in a forward direction until a first predefined number of pulse counts have been obtained in the controller (120) via the pulse count signal (PC), comprising defining the home position by executing the steps:
(a) controlling the electric motor (120) to cause the gear assembly (220) to operate on the at least one friction member (221; 222) in an approaching direction wherein the at least one friction member (221; 222) is moved to the engaged position (P_{ENG}), continue to control the electric motor (120) to cause the gear assembly (220) to operate on the at least one friction member (221; 222) in the approaching direction until the pressure signal (F) exceeds a first threshold value (F₁), thereafter
(b) controlling the electric motor (230) to stop, and subsequently
(c) retracting the at least one friction member (221; 222) from the rotating member (110) to the idle distance (d_{IDL}) by controlling the electric motor (230) to operate on the gear assembly (220) to cause the gear assembly (220) to move the at least one friction member (221; 222) in a retreating direction until a second predefined number of pulse counts have been obtained in the controller (120) via the pulse count signal (PC), which retreating direction is opposite to the approaching direction,
**characterized by**, each time when executing the steps (a) to (c) the method further comprises:
controlling the electric motor (230) to operate on the gear assembly (220) to cause the gear assembly (220) to retract the at least one friction member (221; 222) from the rotating member (110) in the retreating direction until the pressure signal (F) falls below a negative threshold value designating a maximum retraction of the at least one friction member (221; 222),
recording a first number of pulse counts obtained via the pulse count signal (PC) while executing step (a), and if the first number of pulse counts exceeds a threshold count
triggering a maintenance alarm with respect to the at least one friction member (221; 222).

12. The method according to claim 11, wherein between steps (b) and (c), the method comprises:
retracting the at least one friction member (221; 222) from the rotating member (110) until the pressure signal (F) falls below a second threshold value (F₂) being lower than the first threshold value (F₁).

13. The method according to any one of the claims 11 or 12, wherein, each time when executing the steps (a) to (c), the method further comprises:
recording a first number of pulse counts obtained via the pulse count signal (PC) while executing step (a),
comparing the recorded first number of pulse counts to the second predefined number of pulse counts, if latter number is lower
incrementing a wear count by a difference between said first and second numbers, and if the wear count exceeds a threshold count
triggering a maintenance alarm with respect to the at least one friction member (221; 222).

14. The method according to any one of the claims 11 to 13, wherein the electric motor (230) is configured to produce a rotational force on an output shaft of the electric motor (230), which rotational force is proportional to a drive current fed into the electric motor (230), and the method comprises:
deriving the pressure signal (F) based on the drive current to the electric motor (230).

15. A computer program (425) loadable into a non-volatile data carrier (420) communicatively connected to at least one processor (430), the computer program (425) comprising software for executing the method according any of the claims 11 to 14 when the computer program (425) is run on the at least one processor (430).

16. A non-volatile data carrier (420) containing the computer program (425) of the claim 15.
